# EUROPEAN PATENT SPECIFICATION

(11) **EP 2 616 168 B1**
(45) Date of publication and mention of the grant of the patent: **27.05.2020**
(21) Application number: 11776523.0
(22) Date of filing: 13.09.2011
(51) Int. Cl.: B01D 69/08, B01D 61/14, B01D 71/28, B01D 71/40, B01D 71/42, B01D 71/68, B01D 71/82, B01D 71/76

(54) **HIGH FLUX HOLLOW FIBER ULTRAFILTRATION MEMBRANES AND PROCESS FOR THE PREPARATION THEREOF**
HOHLFASER-ULTRAFILTRIERMEMBRANEN MIT HOHEM DURCHFLUSS UND VERFAHREN ZU IHRER HERSTELLUNG
MEMBRANES D'ULTRAFILTRATION SOUS FORME DE FIBRES CREUSES À FLUX ÉLEVÉ ET LEUR PROCÉDÉ DE PRÉPARATION

(30) Priority: 14.09.2010 IN MU21782010
(43) Date of publication of application: 24.07.2013
(73) Proprietor: Council of Scientific & Industrial Research, New Delhi 110 001 (IN)
(72) Inventor: REDDY, Alamuru, Venktarami, 364002 Bhavnagar (Gujarat) (IN); RAY, Paramita, 364002 Bhavnagar (Gujarat) (IN); SINGH, Puyam, Sobhindro, 364002 Bhavnagar (Gujarat) (IN); KALLEM, Parashuram, 364002 Bhavnagar (Gujarat) (IN); MAURYA, Sandipkumar, 364002 Bhavnagar (Gujarat) (IN); TRIVEDI, Jitendra, Jaydevprasad, 364002 Bhavnagar (Gujarat) (IN)
(74) Representative: Nederlandsch Octrooibureau
(86) International application number: PCT/IB2011/002124
(87) International publication number: WO 2012/035402

(56) References cited:
- CN-A- 1 110 625
- JP-A- H06 248 180
- US-A1- 2001 006 160
- US-A1- 2004 026 315
- US-A1- 2007 163 950

## Description

### FIELD OF THE INVENTION

The present invention relates to a high flux hollow fiber ultrafiltration membrane prepared from polysulfone + ion exchange resin (sulfonated polystyrene-divinyl benzene copolymer) blend.

The present invention further relates to development of hollow fiber ultrafiltration membrane that delivers biologically pure water at a desirable rate i.e. 50-200 liters/m².h.

The present invention further relates to a point-of-use (POU) water filtration unit for water purification and disinfection. Using the hollow fiber membranes a point-of-use water filtration unit which is a simple, compact, inexpensive device that does not require electricity has been developed to produce 150-300 ml/min product water when attached to a tap from an overhead tank of about 3 meter height.

### BACKGROUND OF THE INVENTION

Waterborne diseases due to microbial contamination in drinking water are the major health problems throughout the world and providing safe drinking water to the common man is emerging as one of the major challenges of this century. Water purification systems using membrane processes like reverse osmosis, nanofiltration, ultrafiltration, electrodialysis for filtering and purifying water to obtain safe potable water are available in the market. Among these membrane processes, ultrafiltration process is the most efficient process in terms of productivity because of its high water permeability particularly in the treatment of impure turbid water containing suspended particles, pathogens and other harmful microorganisms.

Different membrane types of water ultrafiltration process exist in the market, one of which is based on polymer hollow-fiber.

References may be made to patent JP 2006088148, wherein a process for making a polysulfone ultrafiltration hollow fiber membrane used for water treatment is disclosed.

The hollow fiber has sponge structure having 10-220 µm pore size in the inner surface and 0.01-5 µm pore size on the outer surface.

References may be made to patent EP927572A, wherein a process for making hollow fiber membranes from a spinning dope comprising of polysulfone, polyvinylpyrollidone and organic solvent using mixture of inorganic salt, diethylene glycol and water as internal bore forming liquid and water or water with DEG/CaCl2 as external coagulating liquid has been disclosed. These fibers are having pore size suitable for the separation of cytochrome-C having molecular weight of 12400 g/mol.

References may be made to patent US2004026315A1, discloses a process for making polysulfone hollow fine fiber membrane from a mixture of polysulfone, a hydrophilic polyvinylpyrrolidone and solvent using melt spinning process having fiber diameter of about 200 micron for application in dialysis.

References may be made to patents CN1557532-A; CN1261197-C, wherein a process of polysulfone fiber making from a mixture of polysulfone and polyvinylpyrollidone through dry and wet spinning process resulting to fiber having 0.7 to 2.0 mm inner diameter for using in city water processing has been disclosed.

References may be made to patent EP 0568045A1, wherein polysulfone-PVP based hollow fiber membrane where the PVP content in inner skin layer is higher than the outer skin layer by extrusion at 50°C having fiber diameter of 280 µm for application in body fluid treatment has been disclosed.

References may be made to patent JP 09052028, wherein spinning of polyacrylonitrile hollow fiber after degassing the spinning dope at above room temperature and purging with an inert gas for improving the spinning stability of the PAN fibers has been disclosed.

References may be made to Journal "Separation and Purification Technology 2006, 52(2), 380-387" wherein Yu, D-G et al. reported fabrication of polyacrylonitrile (PAN) hollow fiber membranes from PAN fibers spun via the dry-jet wet spinning process and have shown the influence of draw ratio to the fiber properties.

References may be made to Journal "Journal of Membrane Science 1997, 132(1), 63-71), wherein Yang, M.-C. and Tong, J.H. reported spinning of PAN hollow fiber and modification by surface hydrolysis forming a thin layer of polyacrylic acid on the surface of the hollow fiber having rejection of myoglobin and cytochrome-C having molecular weight of about 12000- 16000 g/mol.

References may be made to patent CN1110625A, wherein flat-sheet membranes have been developed from the blend of polyacrylonitrile and polysulfone by solution casting and evaporation techniques.

Further reference is made to the following documents. JP H06 248180A discloses the preparation of membranes from polysulfone and a polyacrylonitrile polymer. US2007/163950A1 discloses the preparation of polysulfone (PS) and polyethersulfone (PES) based hollow fiber membranes. US2001/006160A1 discloses the preparation of polyethersulfone (PES) based hollow fiber membranes.

The prior art have many drawbacks. For example, polysulfone fiber of the prior art is hydrophobic which may result in less flux and more fouling prone while in operation. The PAN fiber being hydrophilic and relatively more flexible with smooth surface is prone to shrinkage and brittleness in dry condition resulting to difficulties in handling and long-term storage.

### OBJECTIVE OF THE INVENTION

The main object of the present invention is to prepare high flux ultrafiltration polymeric hollow fiber membranes for water purification and disinfection.

Yet another object of the present invention is to prepare a blend hollow fiber ultrafiltration membrane to eliminate the drawbacks of hollow fibers made from homopolymers.

Yet another object of the present invention is to prepare a blend membrane of polysulfone and cation exchange resin (sulfonated polystyrene-divinyl benzene copolymer) to enhance separation efficiency, fouling resistance and product water flux.

Yet another object of the present invention is to use the hollow fiber as point-of-use water filtration unit.

### SUMMARY OF THE INVENTION

Accordingly, in a first aspect the present invention provides high flux, hollow fiber ultrafiltration polymeric membrane comprising a blend of polysulfone (PSF) and a copolymer in a ratio ranging between 96:4 to 99.5:0.5 (w/w) wherein the copolymer is sulfonated polystyrene-divinyl benzene copolymer as cation exchange resin (CXR).

In an embodiment of the present invention, said membrane optionally comprising poly(acrylonitrile-co-methacrylic acid) (PANMA).

Another aspect of the present invention concerns the use of said membrane for water purification, reclamation and disinfection.

In yet another embodiment of the present invention, the outer and inner diameter of the fiber is in the range of 1000 to 1100 micrometer and 700 to 750 micrometer respectively.

In yet another embodiment of the present invention, the fiber wall thickness is in the range of 250 to 350 micrometer.

In yet another embodiment of the present invention, the outer and inner skin layer thickness is in the range of 1.7 to 2 µm.

In yet another embodiment of the present invention, Nephelometric Turbidity Unit (NTU) reduction percentage is in the range of 98-99.5% from feed water having up to 100 NTU.

In yet another embodiment of the present invention, bacterial reduction log value of said membrane is in the range of 4 to 6.

In yet another embodiment of the present invention, molecular weight cut-off (MWCO) is in the range of 20 to 50 kDa based on polyethylene glycol separation.

In yet another embodiment of the present invention, pure water flux is in the range of 80 to 250 1/m².h, bursting pressure is in the range of (3.1 to 3.4 bar) 45 to 50 psi, flux recovery ratio is in the range of 80 to 95 and separation efficiency of 20 kDa polyethylene glycol is in the range of 60 to 90.

In yet another embodiment of the present invention, pure water permeability is in the range of 50-200 liters/m².hr at (1.4 to 1.7 bar) 20 to 25 psi.

In another aspect, the invention provides a process for the preparation of a high flux, hollow fiber ultrafiltration polymeric membrane as defined herein comprising the steps of:
a) dissolving 19-20% w/w polysulphone, 2-5% w/w polyvinylpyrrolidone and 0.2 to 0.8% w/w sulfonated polystyrene-divinyl benzene copolymer as cation exchange resin (CXR) in 70-80% w/w polar organic solvent under constant stirring at a rate in the range of 1400 to 1600 rpm at a temperature in the range of 80 to 100°C for a period in the range of 3 to 4 hours, followed by pushing at (1.2 to 1.4 bar) 17 to 20 psi nitrogen pressure to prepare a transparent spinning dope;
b) extruding the spinning dope as obtained in step (a) through an external orifice of a double orifice spinneret maintaining an extrusion rate in the range of 30 to 100 g/minute;
c) flowing water through the internal orifice of a double orifice spinneret maintaining a flow rate in the range of 20 to 50 ml/minute;
d) maintaining a polymer extrusion rate in the range of 35 to 42 meters/minute for a period in the range of 3 to 4 hrs;
e) gelling the outer surface of the extruded hollow fiber in a water bath maintained at a temperature in the range of 25 to 30° C, followed by washing with water and immerging in methanol for a period in the range of 4 to 5 hrs to obtain the hollow fiber ultrafiltration polymeric membrane.

In yet another embodiment of the present invention, the organic solvent used is selected from the group consisting of dimethylformamide (DMF), N-methyl-2-pyrrolidone (NMP) or dimethyl sulfoxide (DMSO).

In yet another embodiment of the present invention, the membranes are spun with a production rate of 3000 to 10,800 meters length per batch.

Yet another embodiment of the present invention concerns a water filtration unit comprising the hollow fiber ultrafiltration membrane.

In yet another embodiment of the present invention, the water filtration unit is attached to a tap from an overhead tank of about 3 meter height.

### BRIEF DESCRIPTION OF THE DRAWING

Figure 1 : Schematic depiction of a typical hollow fiber spinning unit. The details of the hollow fiber spinning unit are shown schematically in Figure 1. The HF spinning line consists of: i) polymer solution tank ii) Metering Pump iii) Solution stabilizing container iv) Annular Spinneret v) Gelation bath vi) fiber drawing roller and vii) Fiber winding roller.
Figure 2 represent hollow fibre membrane based point-of-use (POU) water purification device.
Figure 3 represents the scanning electron microscopy photographs of the hollow fibres indicating their morphology.

### DETAIL DESCRIPTION OF THE INVENTION

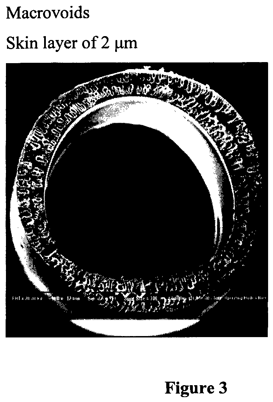

The present invention relates to the development of hollow fiber membrane prepared from polysulfone + ion exchange resin (sulfonated polystyrene-divinyl benzene copolymer) blend for drinking water purification and water reclamation. The membrane can produce safe drinking water by physical exclusion of microorganisms, turbidity, etc., from contaminated water. The blend hollow fiber membrane is relatively more flexible, easy to handle, durable, fouling resistant and of high flux in comparison with the fibers made from polysulfone or poly (acrylonitrile-methacrylic acid). Improvement in the separation efficiency can be achieved by the surface modified blend membranes with acid groups which have smaller pore size and surface charge. Such hollow fiber membranes developed here can be utilised as point-of-use water filtration unit which is simple, compact, and inexpensive and requires no electricity. The other noteworthy features are: i) the membranes have active skin layer on both inner and outer surface to operate either out-to-in or in-to-out fashion for flexible operational design and intermittent washing thereby increasing the membrane life; (ii) The membrane has bilayer sponge microstructure of which each layer comprised of dense skin layer cushioned by sponge layer comprised of macro voids as shown in Figure 3 for extra strength and high flux.

The developed membrane has an active layer with a pore size which effectively rejects pathogens and other bacteria from contaminated water while allowing the passage of water to produce biologically pure water for drinking. The present invention provides a hollow fiber ultrafiltration membrane that delivers biologically pure water at a desirable rate that is at a rate 50-200 liters/m².h. The membrane performance in terms of flux and rejection efficiency is dependent on polymer material type and surface properties. The hollow fiber membrane with interpenetrated structure prepared from polysulfone + ion exchange resin (sulfonated polystyrene-divinyl benzene copolymer) is advantageous over the membranes made either from polysulfone or the copolymer alone in terms of durability, strength, elasticity, smoothness, flux, separation efficiency, fouling resistance properties. The surface modified blend membranes with acid groups which have smaller pore size and surface charge exhibit further improvement in the separation efficiency.

In the present invention, the following terminology has been used as:
Membrane flux: Indicates the volume of water which is being permeated out (passing out) of the 1 m² of the membrane per hour (l/m².h)
NTU (Nephelometric Turbiditv Unit): This unit is used to indicate the rejection of the membrane for particulate material from liquid solutions.
MWCO (Molecular weight cut off) value: Indicates the lowest molecular weight of the polymer or any solute for which the membrane exhibits more than 90% rejection when tested using the solution of the polymer or solute. The units are kDa (kilo Daltons) or Da (Daltons).
Bursting pressure: Indicates the bursting strength (toleration) of the fibers when air/liquid is passed through it under some pressurized condition.
Separation efficiency: Indicates the efficiency of the membrane to reject different solutes when tested using their solutions.
Water permeability: Similar to membrane flux (given above).

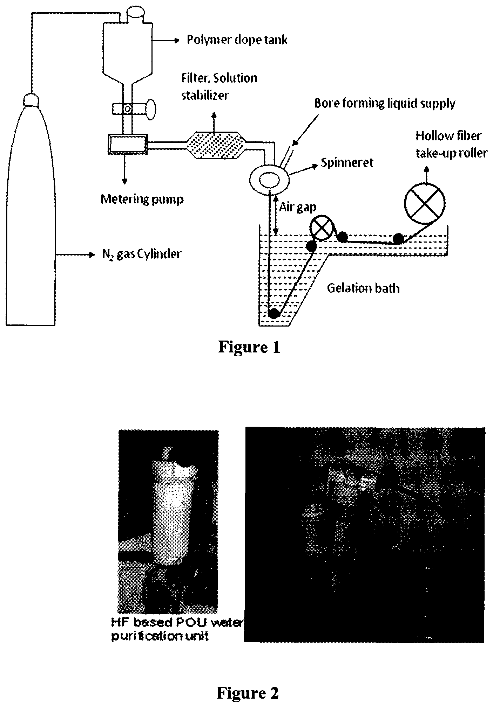

The present invention further relates to a point-of-use filtration unit (Water filtration Unit) for water purification and disinfection. In this unit, the hollow fibre ultrafiltration membranes are bundled together with potting adhesive in such a way that both the ends of the fibre are together on the same side like "U" shape and fixed in the cap, the cap holder with water inlet and out let connections and the cylindrical container to fix the cap (Figure 2).

Using the hollow fiber membranes a point-of-use water filtration unit which is a simple, compact, inexpensive device that does not require electricity has been developed to produce 150-300 ml/min product water when attached to a tap from an overhead tank of about 3 meter height.

The details of the hollow fiber spinning unit are shown schematically in Figure 1. The HF spinning line consists of: i) polymer solution tank ii) Metering Pump iii) Solution stabilizing container iv) Annular Spinneret v) Gelation bath vi) fiber drawing roller and vii) Fiber winding roller.

In the hollow fiber spinning process, a polymer solution was first transferred to the clean and dry polymer solution tank which in turn was connected to nitrogen gas cylinder. The polymer solution was pushed at about 1.4 bar (20 psi) nitrogen pressure to the pump which in turn delivers the solution to the double orifice spinneret which has 0.5, 1.0, 1.5 mm annular holes. The polymer solution was extruded through the outer orifice at a rate of 33-35 g/min while RO water was passed at a rate of 24-25 ml/min through the central orifice of the spinneret. This results in the formation of the lumen inside the fiber by a phase inversion process of the polymer solution because water is a non-solvent for the polymer. The outer surface of the hollow fibers membranes was gelled by a phase inversion process in a water bath at 25°C. For a 4 kg polymer solution batch, spinning was continued for about 100 minutes and thus producing a hollow fiber of 3300-3500 m length. The hollow fibers were then thoroughly washed with water and immersed in methanol for 2 hrs. The hollow fibers thus obtained were stored in RO water containing 10% glycerol and 1% formalin.

**Table 1: Hollow Fiber Properties of different membranes**

| Properties | Polysulfon e (PSF) | Poly (acrylonitrile -methacrylic acid) (PANMA) | PSF-PANMA blend^{a} | PSF-CXR blend^{b} |
|---|---|---|---|---|
| Separation efficiency of 20 KDa PEG | 62 | 33 | 89 | 60 |
| Elasticity/flexibility | Flexible | Brittle on drying | Flexible | Flexible |
| Surface smoothness | Relatively rough | Very smooth | Smooth | Smooth |
| Fouling resistance (Flux Recovery ratio) | 71 | 85 | 80 | 93 |
| Mechanical strength (bursting pressure) | 50 psi | 50 psi | 50 psi | 50 psi |
| Membrane performance (pure water flux, l/m².h) | 70 | 212 | 150 | 86 |

| | | | | |
|---|---|---|---|---|
| a) 19.8% (w/w) PSF and 0.2 % (w/w) PANMA (not according to the invention) b) 20% (w/w) PSF and 0.4 % (w/w) CXR | | | | |

In the above table, the data indicates that the polysulfone membrane exhibits lower water flux but somewhat higher separation efficiency and the PANMA membrane exhibits very high water flux but low separation efficiency. The PSF-PANMA and PSF-CXR blend membranes exhibit high rejection as well as higher water flux than PSF alone but somewhat lower than PANMA. Besides, these membranes also exhibit higher fouling resistance as compared to PSF alone.

### EXAMPLES

### Example 1 (UF membrane prepared from polysulphone only, not according to the invention)

A mixture of polysulphone (20 %, w/w) and polyvinylpyrrolidone (2 %, w/w) was dissolved in dimethylformamide (78%, w/w) under constant stirring rate at 1400 rpm at a temperature of 80 °C for 4 hours to prepare a transparent spinning dope. The spinning dope was extruded under a nitrogen environment through a double orifice spinneret. The water flowed through the inner nozzle of the spinneret at the rate of 25 ml/minute and acts as bore former by causing the phase inversion in the inner part of the polysulphone hollow fiber.

The extrusion rate was maintained at 35 meters/minute for the duration of 4 hours and the outer surface of the extruded hollow fiber was also gelled in a water bath maintained at a temperature of 23 °C. The hollow fibers of 8400 m length thus obtained from the dope solution of 9 L were washed thoroughly with water and immersed in methanol for 4 hrs.

The hollow fibers were then preserved in RO water containing 10% glycerol and 1% formalin. Table 2 gives the characteristics and performance of the hollow fibers.

**TABLE 2: Hollow Fiber characteristics and performance**

| | |
|---|---|
| Hollow Fiber Inner diameter (micrometer) | 650 |
| Hollow Fiber Outer diameter (micrometer) | 1000 |
| Hollow Fiber Wall thickness (micrometer) | 175 |
| Pure water permeability at 25 psi 70 (liters/m2.hr) | 70 |
| NTU reduction, % | 99 |
| Bacterial reduction (log value) | 6 |
| PEG 35000, % rejection | 80 |
| PEG 20000, % rejection | 62 |
| PEG 10000, % rejection | 45 |
| MWCO (molecular weigh cut-off) (Da) | 91000 |

### Example 2 (UF membrane prepared from polysulphone only, not according to the invention)

A mixture of polysulphone (22 %, w/w) and polyvinylpyrrolidone (2 %, w/w) was dissolved in dimethylformamide (76%, w/w) under constant stirring at 1400 rpm at a temperature of 80 °C for 4 hours to prepare a transparent spinning dope. The spinning dope was extruded under a nitrogen environment through a double orifice spinneret. The water flowed through the inner nozzle of the spinneret at the rate of 25 ml/minute and acts as lumen former by causing the phase inversion in the inner part of the polysulphone hollow fiber. The extrusion rate was maintained at 35 meters/minute for the duration of 2 hours and the outer surface of the extruded hollow fiber was also gelled in a water bath maintained at a temperature of 25°C. The hollow fibers of 4200 m length thus obtained from the dope solution of 4.5 L were washed thoroughly with water and immersed in methanol for 4 hrs.

The hollow fibers were then preserved in RO water containing 10% glycerol and 1% formalin. Table 3 gives the characteristics and performance of the hollow fibers.

**TABLE 3: Hollow Fiber characteristics and performance**

| | |
|---|---|
| Hollow Fiber Inner diameter (micrometer) | 650 |
| Hollow Fiber Outer diameter (micrometer) | 1000 |
| Hollow Fiber Wall thickness (micrometer) | 175 |
| Pure water permeability at 25 psi (liters/m².hr) | 71 |
| NTU reduction, % | >99 |
| Bacterial reduction (log value) | 6 |
| PEG 35000, % rejection | 89 |
| PEG 20000, % rejection | 62 |
| PEG 10000, % rejection | 45 |
| MWCO (molecular weight cut-off) (Da) | 37000 |

### Example 3: (UF membrane prepared from polysulphone only, not according to the invention)

A mixture of polysulphone (24 %, w/w) and polyvinylpyrrolidone (4 %, w/w) was dissolved in dimethylformamide (72%, w/w) under constant stirring at 1400 rpm at a temperature of 80 °C for 4 hours to prepare a transparent spinning dope. The spinning dope was extruded under a nitrogen environment through a double orifice spinneret. The water flowed through the inner nozzle of the spinneret at the rate of 25 ml/minute and acts as bore former by causing the phase inversion in the inner part of the polysulphone hollow fiber.

The extrusion rate was maintained at 35 meters/minute for the duration of 1 hour and the outer surface of the extruded hollow fiber was also gelled in a water bath maintained at a temperature of 27°C. The hollow fibers of 2100 m length thus obtained from the dope solution of 2 L were washed thoroughly with water and immersed in methanol for 4 hrs.

The hollow fibers were then preserved in RO water containing 10% glycerol and 1% formalin. Table 4 gives the characteristics and performance of the hollow fibers.

**TABLE 4: Hollow Fiber characteristics and performance**

| | |
|---|---|
| Hollow Fiber Inner diameter (micrometer) | 650 |
| Hollow Fiber Outer diameter (micrometer) | 1000 |
| Hollow Fiber Wall thickness (micrometer) | 175 |
| Pure water permeability at 25 psi (liters/m².hr) | 52 |
| NTU reduction, % | 99.5 |
| Bacterial reduction (log value) | 6 |
| PEG 35000, % rejection | 99 |
| P EG 20000, % rejection | 95 |
| PEG 10000, % rejection | 89 |
| MWCO (molecular weight cut-off) (Da) | 1 2000 |

### Example 4 (UF membrane prepared from polysulphone only, not according to the invention)

A mixture of polysulphone (24 %, w/w) and polyvinylpyrrolidone (8 %, w/w) was dissolved in dimethylformamide (68%, w/w) under constant stirring at 1400 rpm at a temperature of 80 °C for 4 hours to prepare a transparent spinning dope. The spinning dope was extruded under a nitrogen environment through a double orifice spinneret. The water flowed through the inner nozzle of the spinneret at a rate of 25 ml/minute and acts as bore former by causing the phase inversion in the inner part of the polysulphone hollow fiber.

The extrusion rate was maintained at 35 meters/minute for the duration of 1 hour and the outer surface of the extruded hollow fiber was also gelled in a water bath maintained at a temperature of 25°C. The hollow fibers of 2100 m length thus obtained from the dope solution of 2 L were washed thoroughly with water and immersed in methanol for 4 hrs.

The hollow fibers were then preserved in RO water containing 10% glycerol and 1% formalin. Table 5 gives the characteristics and performance of the hollow fibers.

**TABLE 5: Hollow Fiber characteristics and performance**

| | |
|---|---|
| Hollow Fiber Inner diameter (micrometer) | 650 |
| Hollow Fiber Outer diameter (micrometer) | 1000 |
| Hollow Fiber Wall thickness (micrometer) | 175 |
| Pure water permeability at 25 psi (liters/m².hr) | 92 |
| NTU reduction, % | 99 |
| Bacterial reduction (log value) | 6 |
| PEG 35000, % rejection | 99.2 |
| PEG 20000, % rejection | 85 |
| PEG 10000, % rejection | 52 |
| MWCO (molecular weight cut-off) (Da) | 27000 |

### Example 5 (UF membrane prepared from poly(acrylonitrile-co-methacrylic acid) only, not according to the invention)

A mixture of poly(acrylonitrile-co-methacrylic acid) (18%, w/w) was dissolved in dimethylformamide (82%, w/w) under constant stirring at 1600 rpm at a temperature of 80 °C for 4 hours to prepare a transparent spinning dope. The spinning dope was extruded under a nitrogen environment through a double orifice spinneret. The water flowed through the inner nozzle of the spinneret at a rate of 25 ml/minute and acts as bore former by causing the phase inversion in the inner part of the poly(acrylonitrile-co-methacrylic acid) hollow fiber. The extrusion rate was maintained at 30 meters/minute for the duration of 4 hours and the outer surface of the extruded hollow fiber was also gelled in awater bath maintained at a temperature of 25 °C. The hollow fibers of 7200 m length thus obtained from the dope solution of 7.5 L were washed thoroughly with water and immersed in methanol for 4 hrs.

The hollow fibers were then preserved in RO water containing 10% glycerol and 1% formalin. Table 6 gives the characteristics and performance of the hollow fibers.

**TABLE 6: Hollow Fiber characteristics and performance**

| | |
|---|---|
| Inner diameter (micrometer) | 900 |
| Outer diameter (micrometer) | 1200 |
| Wall thickness (micrometer) | 150 |
| Pure water permeability at 25 psi (liters/m².hr) | 212 |
| NTU reduction, % | 99 |
| Bacterial reduction (log value) | 4 |
| PEG 35000, % rejection | 77 |
| PEG 20000, % rejection | 33 |
| PEG 10000, % rejection | 20 |
| MWCO (molecular weight cut-off) (Da) | 46000 |

### Example 6 (UF membrane prepared from the blend of polysulphone and poly(acrylonitrile-co-methacrylic acid), not according to the invention)

A mixture of polysulphone (19.5 %, w/w) and polyvinylpyrrolidone (2 %, w/w) and poly(acrylonitrile-co-methacrylic acid) (0.5%, w/w) was dissolved in dimethylformamide (78%, w/w) under a constant stirring rate of 1400 rpm at a temperature of 80 °C for 4 hours to prepare a transparent spinning dope. The spinning dope was extruded under a nitrogen environment through a double orifice spinneret. The water flowed through the inner nozzle of the spinneret at a rate of 40 ml/minute and acts as bore former by causing the phase inversion in the inner part of the polysulphone hollow fiber. The extrusion rate was maintained at 40 meters/minute for the duration of 4 hour and the outer surface of the extruded hollow fiber was also gelled in a water bath maintained at a temperature of 27 °C.

The hollow fibers of 9600 m length thus obtained from the dope solution of 10 L were washed thoroughly with water and immersed in methanol for 4 hrs. The hollow fibers thus obtained were stored in RO water containing 10% glycerol and 1% formalin. The fiber characteristics are given in Table 7.

**TABLE 7: Fiber characteristics and performance**

| | |
|---|---|
| Inner diameter (micrometer) | 700 |
| Outer diameter (micrometer) | 1000 |
| Wall thickness (micrometer) | 150 |
| Pure water permeability at 25 psi (liters/m².hr) | 120 |
| NTU % reduction, initial NTU (Nephelometric Turbidity Unit) | 99, 100 |
| Bacterial reduction (log value) | 4 |
| PEG 35000, % rejection | 99 |
| PEG 20000, % rejection | 85 |
| PEG 10000, % rejection | 82 |
| PEG 6000, % rejection | 49 |
| MWCO (molecular weight cut-off) (Da) | 20000 |

### Example 7 (UF membrane prepared from the blend of polysulphone and poly(acrylonitrile-co-methacrylic acid), not according to the invention)

A mixture of polysulphone (19.2 %, w/w) and polyvinylpyrrolidone (2 %, w/w) and poly(acrylonitrile-co-methacrylic acid) (0.8%, w/w) was dissolved in dimethylformamide (78%, w/w) under constant stirring at a rate of 1400 rpm at a temperature of 80 °C for 4 hours to prepare a transparent spinning dope. The spinning dope was extruded under a nitrogen environment through a double orifice spinneret. The water flowed through the inner nozzle of the spinneret at a rate of 40 ml/minute and acts as bore former by causing the phase inversion in the inner part of the polysulphone hollow fiber. The extrusion rate was maintained at 35 meters/minute for the duration of 4 hours and the outer surface of the extruded hollow fiber was also gelled in a water bath maintained at a temperature of 25 °C.

The hollow fibers of 8400 m length thus obtained from the dope solution of 9 L were washed thoroughly with water and immersed in methanol for 4 hrs. The hollow fibers were then preserved in RO water containing 10% glycerol and 1% formalin. Table 8 gives the characteristics and performance of the hollow fibers.

**TABLE 8: Hollow Fiber characteristics and performance**

| | |
|---|---|
| Inner diameter (micrometer) | 750 |
| Outer diameter (micrometer) | 1000 |
| Wall thickness (micrometer) | 125 |
| Pure water permeability at 25 psi (liters/m².hr) | 150 |
| NTU reduction, % | 99 |
| Bacterial reduction (log value) | 6 |
| PEG 35000, % rejection | 99 |
| PEG 20000, % rejection | 72 |
| PEG 10000, % rejection | 48 |
| PEG 6000, % rejection | 42 |
| MWCO (molecular weight cut-off) (Da) | 30000 |

### Example 8 (UF membrane prepared from the blend of polysulphone and poly(acrylonitrile-co-methacrylic acid), not according to the invention)

A mixture of polysulphone (19.8 %, w/w) and polyvinylpyrrolidone (2 %, w/w) and poly(acrylonitrile-co-methacrylic acid) (0.2%, w/w) was dissolved in dimethylformamide (78%, w/w) under a constant stirring rate of 1400 rpm at a temperature of 80 °C for 4 hours to prepare a transparent spinning dope. The spinning dope was extruded under a nitrogen environment through a double orifice spinneret. The water flowed through the inner nozzle of the spinneret at a rate of 50 ml/minute and acts as bore former by causing the phase inversion in the inner part of the polysulphone hollow fiber. The extrusion rate was maintained at 42 meters/minute for the duration of 4 hours and the outer surface of the extruded hollow fiber was also gelled in a water bath maintained at a temperature of 27 °C.

The hollow fibers of 10080 m length thus obtained from the dope solution of 11.5 L were washed thoroughly with water and immersed in methanol for 4 hrs. The hollow fibers were then preserved in RO water containing 10% glycerol and 1% formalin. Table 9 gives the characteristics and performance of the hollow fibers.

**TABLE 9: Hollow Fiber characteristics and performance**

| | |
|---|---|
| Fiber Inner diameter (micrometer) | 750 |
| Fiber Outer diameter (micrometer) | 1100 |
| Fiber wall thickness (micrometer) | 175 |
| Pure water permeability at 25 psi (liters/m².hr) | 150 |
| NTU reduction, % | 99 |
| Bacterial reduction (log value) | 6 |
| PEG 35000, % rejection | 99 |
| PEG 20000, % rejection | 89 |
| PEG 10000, % rejection | 78 |
| PEG 6000, % rejection | 34 |
| MWCO (molecular weight cut-off) (Da) | 21000 |

### Example 9 (UF membrane prepared from the blend of polysulfone and cation exchange resin (sulfonated polystyrene-divinyl benzene copolymer)

A mixture of polysulphone (20 %, w/w) and polyvinylpyrrolidone (2 %, w/w) and cation exchange resin (sulfonated polystyrene-divinyl benzene copolymer (0.4%, w/w) was dissolved in dimethylformamide (77.6%, w/w) under a constant stirring rate of 1400 rpm at a temperature of 80 °C for 4 hours to prepare a transparent spinning dope. The spinning dope was extruded under a nitrogen environment through a double orifice spinneret. The water flowed through the inner nozzle of the spinneret at a rate of 25 ml/minute and acts as bore former by causing the phase inversion in the inner part of the polysulphone hollow fiber. The extrusion rate was maintained at 35 meters/minute for the duration of 4 hours and the outer surface of the extruded hollow fiber was also gelled in a water bath maintained at a temperature of 27 °C. The hollow fibers of 8400 m length thus obtained from the dope solution of 9 L were washed thoroughly with water and immersed in methanol for 4 hrs.

The hollow fibers were then preserved in RO water containing 10% glycerol and 1% formalin. Table 10 gives the characteristics and performance of the hollow fibers.

**TABLE 10: Hollow Fiber characteristics and performance**

| | |
|---|---|
| Fiber Inner diameter (micrometer) | 800 |
| Fiber Outer diameter (micrometer) | 1100 |
| Fiber wall thickness (micrometer) | 1 50 |
| Pure water permeability at 25 psi (liters/m².hr) | 86 |
| NTU reduction, % | 99 |
| Bacterial reduction (log value) | 6 |
| PEG 35000, % rejection | 84 |

### Example 10 (UF membrane prepared from the blend of polysulfone and cation exchange resin (sulfonated polystyrene-divinyl benzene copolymer)

A mixture of polysulphone (20 %, w/w) and polyvinylpyrrolidone (2 %, w/w) and cation exchange resin (sulfonated polystyrene-divinyl benzene copolymer (0.6%, w/w) was dissolved in dimethyl formamide (77.4%, w/w) under a constant stirring rate of 1400 rpm at a temperature of 80 °C for 4 hours to prepare a transparent spinning dope. The spinning dope was extruded under a nitrogen environment through a double orifice spinneret. The water flowed through the inner nozzle of the spinneret at a rate of 25 ml/minute and acts as bore former by causing the phase inversion in the inner part of the polysulphone hollow fiber. The extrusion rate was maintained at 35 meters/minute for the duration of 4 hours and the outer surface of the extruded hollow fiber was also gelled in a water bath maintained at a temperature of 25 °C. The hollow fibers of 8400 m length thus obtained from the dope solution of 9 L were washed thoroughly with water and immersed in methanol for 4 hrs.

The hollow fibers were then preserved in RO water containing 10% glycerol and 1% formalin. Table 11 gives the characteristics and performance of the hollow fibers.

**TABLE 11: Hollow Fiber characteristics and performance**

| | |
|---|---|
| Fiber Inner diameter (micrometer) | 800 |
| Fiber Outer diameter (micrometer) | 1100 |
| Fiber wall thickness (micrometer) | 150 |
| Pure water permeability at 25 psi (liters/m².hr) | 86 |
| NTU reduction, % | 99 |
| Bacterial reduction (log value) | 6 |
| PEG 35000, % rejection | 82 |

### ADVANTAGES OF THE INVENTION:

The hollow fiber membranes exhibit solute cut off values in the range of 12000 to 91000 Da and are useful for the treatment of different types of solutions. They exhibit 4-6 log bacterial rejections and are useful for disinfection of drinking water for the removal of harmful pathogens. The fibers can be used in point of use domestic water purification units as well as large scale purification plants. Because of the presence of hydrophilic functionality, the fibers show very high water fluxes at 10-25 operating pressure and thus making them suitable for domestic point of use system by directly connecting them to a water tap form the overhead tank of about 4 meters height and thus obviating the need for pump and electricity.

## Claims

1. High flux, hollow fiber ultrafiltration polymeric membrane comprising a blend of polysulfone (PSF) and a copolymer in a ratio ranging between 96:4 to 99.5:0.5 (w/w) wherein the copolymer is sulfonated polystyrene-divinyl benzene copolymer as cation exchange resin (CXR).

2. High flux, hollow fiber ultrafiltration membrane of claim 1, wherein the outer and inner diameter of the fiber is in the range of 1000 to 1100 micrometer and 700 to 750 micrometer respectively.

3. High flux, hollow fiber ultrafiltration membrane of claim 1, wherein the fiber wall thickness is in the range of 125 to 175 micrometer.

4. High flux, hollow fiber ultrafiltration membrane of claim 1, wherein outer and inner skin layer thickness is in the range of 1.7 to 2 µm.

5. Water filtration unit comprising the hollow fibre ultrafiltration membrane according to any one of claims 1 - 4.

6. Water filtration unit of claim 5, wherein said unit is attached to a tap from an overhead tank of about 3 meter height.

7. A process for the preparation of a high flux, hollow fiber ultrafiltration polymeric membrane according to any one of claims 1 - 4, said process comprising the steps of:
a) dissolving 19-20% w/w polysulphone, 2-5% w/w polyvinylpyrrolidone and 0.2 to 0.8% w/w sulfonated polystyrene-divinyl benzene copolymer as cation exchange resin (CXR) in 70-80% w/w polar organic solvent under constant stirring at a rate in the range of 1400 to 1600 rpm at a temperature in the range of 80°C to 100°C for a period in the range of 3 to 4 hours, followed by pushing at 1.2 to 1.4 bar (17 to 20 psi) nitrogen pressure to prepare a transparent spinning dope;
b) extruding the spinning dope as obtained in step (a) through an external orifice of a double orifice spinneret maintaining an extrusion rate in the range of 30 to 100 g/minute;
c) flowing water through the internal orifice of a double orifice spinneret maintaining a flow rate in the range of 20 to 50 ml/minute;
d) maintaining a polymer extrusion rate in the range of 35 to 42 meters/minute for a period in the range of 3 to 4 hrs;
e) gelling the outer surface of the extruded hollow fiber in a water bath maintained at a temperature in the range of 25 to 30°C, followed by washing with water and immerging in methanol for a period in the range of 4 to 5 hrs to obtain the hollow fiber ultrafiltration polymeric membrane.

8. Process according to claim 7, wherein the organic solvent used in step (a) is selected from the group consisting of dimethylformamide (DMF), N-methyl-2-pyrrolidone (NMP) or dimethyl sulfoxide (DMSO).

9. Process of claim 7, wherein the membranes are spun with a production rate of 8,400 to 10,800 meters length per batch.

10. Use of the high flux, hollow fiber ultrafiltration polymeric membrane according to any one of claims 1 - 4, for water purification, reclamation and disinfection.

## Patentansprüche

1. Hohlfaser-Ultrafiltrationspolymermembran mit hohem Fluss, umfassend eine Mischung aus Polysulfon (PSF) und einem Copolymer in einem Verhältnis im Bereich zwischen 96:4 bis 99,5:0,5 (w/w), wobei das Copolymer sulfoniertes Polystyrol-Divinylbenzol-Copolymer als Kationenaustauschharz (CXR) ist.

2. Hohlfaser-Ultrafiltrationspolymermembran mit hohem Fluss nach Anspruch 1, wobei der äußere und innere Durchmesser der Faser in dem Bereich von 1000 bis 1100 Mikrometer bzw. 700 bis 750 Mikrometer liegt.

3. Hohlfaser-Ultrafiltrationspolymermembran mit hohem Fluss nach Anspruch 1, wobei die Faserwanddicke in dem Bereich von 125 bis 175 Mikrometer liegt.

4. Hohlfaser-Ultrafiltrationspolymermembran mit hohem Fluss nach Anspruch 1, wobei die äußere und innere Hautschichtdicke in dem Bereich von 1,7 bis 2 µm liegt.

5. Wasserfiltrationseinheit, umfassend die Hohlfaser-Ultrafiltrationsmembran nach irgendeinem der Ansprüche 1 - 4.

6. Wasserfiltrationseinheit nach Anspruch 5, wobei die Einheit an einem Hahn eines Hochbehälters von etwa 3 Meter Höhe befestigt ist.

7. Verfahren zur Herstellung einer Hohlfaser-Ultrafiltrationspolymermembran mit hohem Fluss nach irgendeinem der Ansprüche 1 - 4, wobei das Verfahren die Schritte umfasst:
a) Auflösen von 19-20 % w/w Polysulfon, 2-5 % w/w Polyvinylpyrrolidon und 0,2 bis 0,8 % w/w sulfoniertes Polystyrol-Divinylbenzol-Copoymer als Kationenaustauschharz (CXR) in 70-80 % w/w polarem organischen Lösungsmittel unter konstantem Rühren bei einer Geschwindigkeit im Bereich von 1400 bis 1600 Upm bei einer Temperatur im Bereich von 80 °C bis 100 °C während eines Zeitraums im Bereich von 3 bis 4 Stunden, gefolgt durch Eindrücken bei 1,2 bis 1,4 Bar (17 bis 20 psi) Stickstoffdruck, um eine transparente Spinnlösung herzustellen;
b) Extrudieren der in Schritt a) erhaltenen Spinnlösung durch eine externe Öffnung einer Spinndüse mit zwei Öffnungen unter Beibehaltung einer Extrusionsgeschwindigkeit im Bereich von 30 bis 100 g/Minute;
c) Strömenlassen von Wasser durch die innere Öffnung einer Spinndüse mit zwei Öffnungen unter Beibehaltung einer Strömungsgeschwindigkeit im Bereich von 20 bis 50 ml/Minute;
d) Beibehalten einer Polymerextrusionsgeschwindigkeit im Bereich von 35 bis 42 Meter/Minute während eines Zeitraums im Bereich von 3 bis 4 Stunden;
e) Gelierenlassen der äußeren Oberfläche der extrudierten Hohlfaser in einem bei einer Temperatur im Bereich von 25 bis 30 °C gehaltenen Wasserbad, nachfolgend Waschen mit Wasser und Eintauchen in Methanol während eines Zeitraums im Bereich von 4 bis 5 Stunden, um eine Hohlfaser-Ultrafiltrationspolymermembran zu erhalten.

8. Verfahren nach Anspruch 7, wobei das in Schritt a) verwendete organische Lösungsmittel aus der Gruppe gewählt wird, bestehend aus Dimethylformamid (DMF), N-Methyl-2-pyrrolidon (NMP) oder Dimethylsulfoxid (DMSO).

9. Verfahren nach Anspruch 7, wobei die Membranen mit einer Produktionsgeschwindigkeit von 8.400 bis 10.800 Meter Länge pro Ansatz gesponnen werden.

10. Verwendung der Hohlfaser-Ultrafiltrationspolymermembran mit hohem Fluss nach irgendeinem der Ansprüche 1-4 für die Wasserreinigung, -aufbereitung und -desinfektion.

## Revendications

1. Membrane polymère d'ultrafiltration en fibre creuse à flux élevé comprenant un mélange de polysulfone (PSF) et d'un copolymère selon un rapport compris entre 96:4 et 99,5:0,5 (p/p), dans laquelle le copolymère est un copolymère de polystyrène sulfoné-divinylbenzène en tant que résine d'échange de cations (CXR).

2. Membrane d'ultrafiltration en fibre creuse à flux élevé selon la revendication 1, dans laquelle le diamètre extérieur et intérieur de la fibre est dans la plage de 1000 à 1100 micromètres et 700 à 750 micromètres, respectivement.

3. Membrane d'ultrafiltration en fibre creuse à flux élevé selon la revendication 1, dans laquelle l'épaisseur de paroi de fibre se situe dans la plage de 125 à 175 micromètres.

4. Membrane d'ultrafiltration en fibre creuse à flux élevé selon la revendication 1, dans laquelle l'épaisseur de couche de peau externe et interne est dans la plage de 1,7 à 2 µm.

5. Unité de filtration d'eau comprenant la membrane d'ultrafiltration en fibre creuse selon l'une quelconque des revendications 1 à 4.

6. Unité de filtration d'eau selon la revendication 5, dans laquelle ladite unité est fixée à un robinet à partir d'un réservoir surélevé à environ 3 mètres de hauteur.

7. Méthode de préparation d'une membrane polymère d'ultrafiltration en fibre creuse à flux élevé selon l'une quelconque des revendications 1 à 4, ladite méthode comprenant les étapes consistant à :
a) dissoudre 19 à 20 % p/p de polysulfone, 2 à 5 % p/p de polyvinylpyrrolidone et 0,2 à 0,8 % p/p de copolymère de polystyrène sulfoné-divinylbenzène en tant que résine échangeuse de cations (CXR) dans 70 à 80 % p/p de solvant organique polaire sous agitation constante à une vitesse dans la plage de 1400 à 1600 tr/min à une température dans la plage de 80°C à 100°C pendant une période dans la plage de 3 à 4 heures, puis pousser à une pression d'azote de 1,2 à 1,4 bar (17 à 20 psi) pour préparer une solution de filage transparente ;
b) extruder la solution de filage telle qu'obtenue à l'étape (a) à travers un orifice externe d'une filière à deux orifices en maintenant un débit d'extrusion dans la plage de 30 à 100 g/minute ;
c) faire couler de l'eau à travers l'orifice interne d'une filière à deux orifices en maintenant un débit dans la plage de 20 à 50 ml/minute ;
d) maintenir un débit d'extrusion de polymère dans la plage de 35 à 42 mètres/minute pendant une période dans la plage de 3 à 4 heures ;
e) gélifier la surface externe de la fibre creuse extrudée dans un bain-marie maintenu à une température dans la plage de 25 à 30°C, puis laver à l'eau et immerger dans du méthanol pendant une période dans la plage de 4 à 5 heures de manière à obtenir la membrane polymère d'ultrafiltration en fibre creuse.

8. Méthode selon la revendication 7, dans laquelle le solvant organique utilisé à l'étape (a) est choisi dans le groupe constitué par le diméthylformamide (DMF), la N-méthyl-2-pyrrolidone (NMP) ou le diméthylsulfoxyde (DMSO).

9. Méthode selon la revendication 7, dans laquelle les membranes sont filées avec un débit de production de 8 400 à 10 800 mètres de longueur par lot.

10. Utilisation de la membrane polymère d'ultrafiltration en fibre creuse à flux élevé selon l'une quelconque des revendications 1 à 4, pour la purification, la régénération et la désinfection d'eau.
